# EUROPEAN PATENT SPECIFICATION

(11) **EP 0 970 280 B1**
(45) Date of publication and mention of the grant of the patent: **26.05.2004**
(21) Application number: 98914857.2
(22) Date of filing: 03.03.1998
(51) Int. Cl.: E02B 15/04

(54) **FLOATING EQUIPMENT FOR RECOVERING SUPERNATANT OILY PRODUCTS**
SCHWIMMENDE VORRICHTUNG FÜR DAS RÜCKGEWINNEN VON ÖLIGEN PRODUKTEN
MATERIEL DE FLOTTEMENT POUR RECUPERER LES PRODUITS HUILEUX

(30) Priority: 03.03.1997 IT TA970001
(43) Date of publication of application: 12.01.2000
(73) Proprietor: Aron S.r.l., 74100 Taranto (IT)
(72) Inventor: ABO, Giancarlo, I-74015 Martina Franca (IT)
(74) Representative: Russo, Saverio, Dott. Ing.
(86) International application number: PCT/EP1998/001169
(87) International publication number: WO 1998/039519

(56) References cited:
- EP-A- 0 234 031
- EP-A- 0 246 963
- EP-A- 0 329 374
- WO-A-80/00161
- WO-A-84/00989
- WO-A-94/10026

## Description

### Technical field

The invention relates to a floating equipment for recovering supernatant oily products, based on the surface adhesion phenomenon.

Surface cleaning of sea or lake waters, polluted by oily, mineral or other products, or the recovery, through physical means of such supernatant substances from the same waters or those located inside wells, tanks, basins, is carried out with devices based on adhesion or more simply by directly removing the polluted waters.

For this purpose, different types of equipment have been built (sometimes called skimmers), that can be schematically grouped into the following categories :
a) disk system,
b) drum system,
c) ribbon system,
d) rope system,
e) bell system.

### Background art

A description of currently used system is now given :
a) disk system
   The equipment comprising a set of steel disks, spaced by about 150/200mm, with a diameter of about 500 mm and thickness of about 3 mm, is assembled on a rotating shaft.
   The assembly is supported by a self-supporting steel structure, fixed or connected to floats that also ensure its horizontal stability.
   The disks that are partially immersed in water rotate at a speed of 10/20 revolutions/minute.
   The supernatant liquid adheres to the rotating disk surface, and is then removed by scrapers and conveyed into a tank ; this equipment has a good efficiency ; however, given its great dimensions and weight, its transport is difficult, lifting means are usually required for installation and maintenance purposes, and deep waters are further required for its use.
b) drum system
   Such equipments are, described in documents WO80/00161 and WO94/10026.
   The document WO80/00161 regards a catamaran sailing boat with propeller, rudders and bilge keels for scavenging large oil slicks and discharge by means of pumps in other collecting means.
   The equipment collects the oil by means of adhesion to the surfaces of drums and by means of scrapers that discharges it in a trough mounted between the lateral drums i.e. suspended above the water surface without contact with it: the oil is afterwards, by means of pumps, discharged in containing means.
   The oil is directed between the drums forming the catamaran to facilitate the adhesion to the drum surfaces, but cannot be stored in this area, because the space between the drums is open at one or both extremities, this being necessary because the device is a catamaran boat.
   Therefore this device needs a trough suspended on the water and separate from it.
   In other words the quantity of oil collected by adhesion with this device depends on the capacity of the trough: without the installation of a trough the oil is lost again in the water and therefore cannot be recovered.
   In the document WO94/10026 is disclosed an apparatus for collecting floating material from the surface of a liquid by means of mechanical device.
   The apparatus includes at least one drum to be rotated, partially immersed in the liquid around a substantially horizontal axis (12).
   The curved surface of the drum is not smooth but patterned so to form scoops by means of cavity, gradually shallower in the intended rotation of the drum itself from a maximum to a minimum depth, due to the fact that radius of the curved surface forming the scoop, increases from a minimum to a maximum value.
   The floating oil is not recovered by adhesion but mainly by a device similar to an hydraulic wheel, furnished with scoops gradually shallower.
   A conveying channel i.e. a trough receives only substances carried down from the drums by mean of the scoops and the help of a baffle that also supports a channel with conveyor.
   The system geometry favours accumulation of floating solid materials or sludges adjacent to collecting drums, strongly decreasing the efficiency thereof.
   The device, based on the scoops operations, also removes water from the water surface, together with the sludges, in a varying amount.
   Both containing tank and conveying channel are open on the top so that they also easily collect water, due to wave motion or rain, that can generate horizontal instability and in some cases even the tank being sunk due to insufficient full-load displacement of the apparatus.
c) ribbon system
   It is scarcely efficient, being fixed and therefore cannot be used in open sea, or even in basins with varying water levels.
   It is composed of a metal flat ribbon that is pinched and squeezed between two rotating rollers, the first one of which is idle and immersed in water while the second one is driving and located outside.
   The ribbon whose length is about 300 mm and whose thickness is about 0.5 mm through surface adhesion collects oily substances, that are then removed by scrapers located next to the driving drum, and sent into a collecting tank.
d) rope system
   It is conceptually similar to the previous one and with similar inconveniences; a rope is used instead of the ribbon, and is « wrought » next to the upper driving drum.
e) bell system
   It is composed of a « bell », located with a vertical axis and with an adjustable height, with its edges being slightly immersed under the free liquid surface at a depth that is function of the supernatant fluid thickness to be removed.
   The bell connected to a suction piping is supported through a frame by floats ensuring the horizontal stability thereof
   Efficiency of this system is good only when oily substances are present with greater and constant thickness ; however, given its very high weight and dimensions, it is difficult to handle, requiring lifting means to be installed and moreover it cannot be used with rough sea.
   The above-described system can also be produced by methods aiming at reducing the aforementioned inconveniences, although they need an almost continuous assistance.

### Summary of the invention

The main object of the present invention is to provide a floating equipment to recover supernatant oils without the installation of a trough or tank suspended on the water to store large quantities of oil without compromising the buoyancy of the equipment, i.e. without the need of large full-loaded displacement of the floating equipment.

Another important object is providing a floating equipment that cannot be sunk and can work even in rough waters (sea, lake surfaces or the like).

Another important object is providing an equipment that can continuously operate, unattended, in stable processes, requiring reduced operating personnel and maintenance operations

Another aim of the invention is to avoid the recovery of the solid material floating on the water surface having a specific weight lighter than that of water and therefore guarantee the efficiency of the equipment.

At this aim the invention solves the problem of eliminating the trough that contains the oil collected, suspended between the drums, by means of the storage of the supernatant oil recovered from the water surface in a closed, delimited room where the bottom is substituted by the same water surface and closed by perimetrical walls of the frame that supports the equipment.

Furthermore the equipment solves the problem to avoid that solid materials having a specific weight lighter than water can be introduced in the closed room forming the storage tank.

### Brief description of the drawings

The invention is described in detail herein below with reference to the enclosed drawings, that respectively provide:
Fig. 1, top view of the equipment;

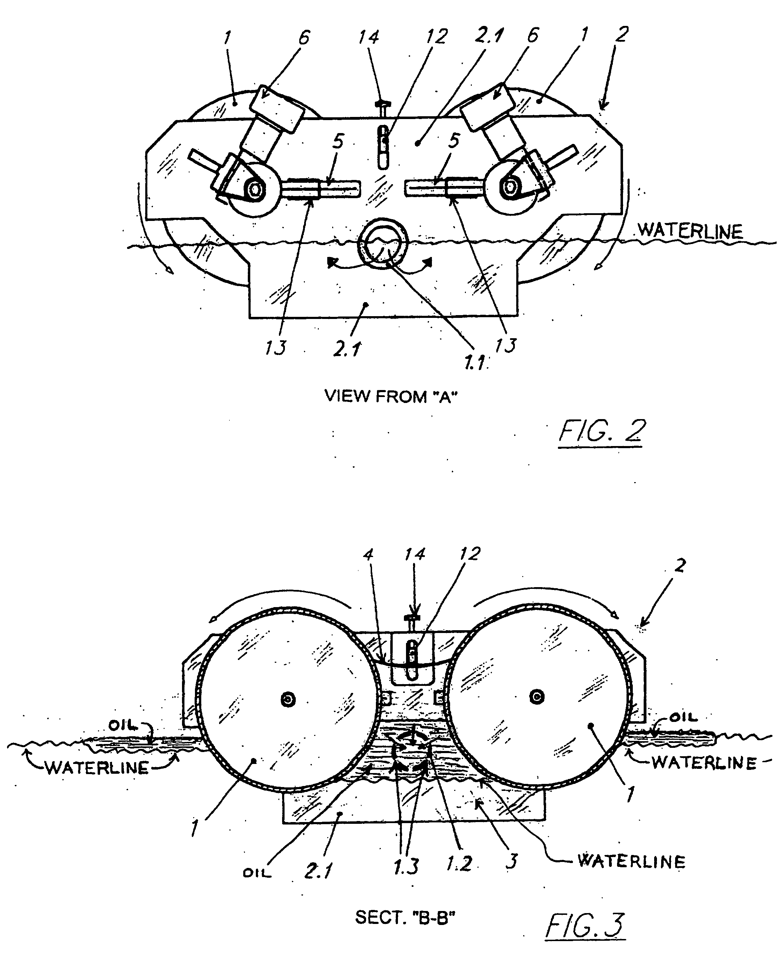

Fig. 2, its lateral view from A;

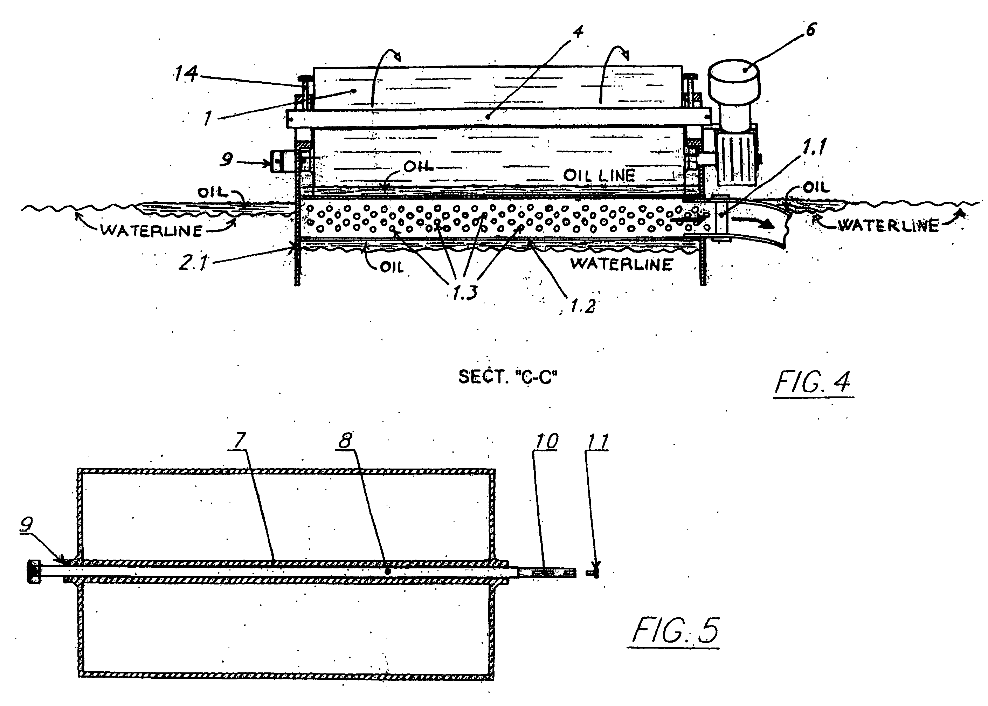

Fig. 3, its BB section with drums, central scraper part and scraper press, while recovering oil;
Fig. 4, its CC longitudinal section, wherein suction mouths and suction filter are displayed;
Fig. 5, a drum assembly part ;
Fig. 6, display of superficial flux lines of the fluid.

### Description of the preferred embodiment

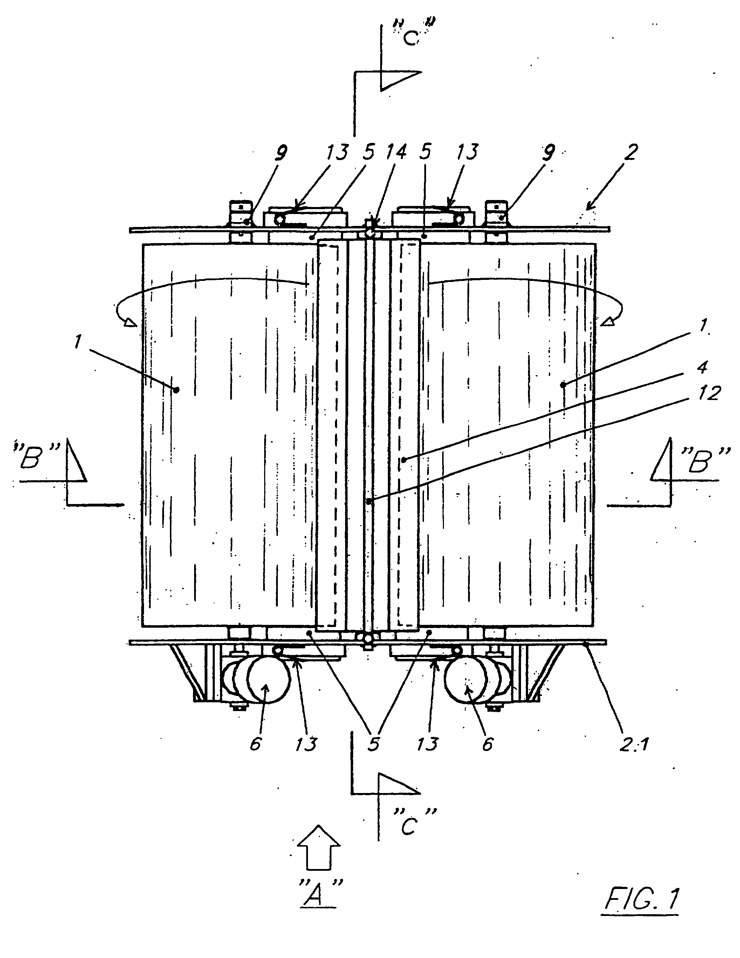

The equipment shown in Fig. 1 consists in a rectangular structure composed of two cylindrical parallel drums 1 and a frame 2 supporting said drums; the two-drums/frame assembly delimits a room 3 inside, that is open above and below, but laterally closed by plates 2.1 forming the frame.

The drums rotate oppositely, each one in such a direction as to drag the floating product recovered from outside downwards and subsequently upwards to the scrapers that cause the falling on the surface of the water forming the bottom of the delimited room 3.

The oil recovered by adhesion to the rotating drums, is conveyed inside the room 3, after having been removed by central scrapers 4 from both drums, the contact line with each drum being placed on a generatrix thereof next to the internal room and adequately above the waterline.

Other two scrapers 5 for each drum placed on the bases thereof next to the internal room, again with contact line above the waterline, complete the oil removal operation.

In this way the product is conveyed inside the room 3, forming, due to the different specific weight, a « free surface » higher than the water line outside the room 3.

The fluid conveyed inside the room 3 is sucked through a pump, by one or more suction mouths 1.1.

Fluid sucked through mouths (1.1) is previously filtered through the cylindrically shaped filter 1.2. The height reached by the fluid inside the room depends on the specific weight, on the hydro dynamical balance that is reached due to drum speed, on the oil viscosity, on the amount of floating product being present in the « area », and the amount being removed by the pump.

Since the room inside the structure is bottom free, an almost complete and immediate separation of water from the product is achieved.

Preferably both drums and frame are made of plastic or of thermoplastic materials chosen among those creating the best surface adhesion of oily substances, such as for example polyolefins and PVC.

The dimensions of the equipment may vary.

Drums, having a 450 mm diameter, have a recovery capacity proven up to 20 m3/h of oil; the drums are rotated at a speed ranging from 4 to 20 r.p.m.; speed is in function of product viscosity to be recovered (a greater viscosity corresponds to a lower speed and viceversa) and of amount (thickness) of fluid being present next to the equipment (a greater thickness corresponds to a higher speed).

Drums are moved by compressed-air motors 6 or by electric/hydraulic motors equipped with speed reducers.

Drums have a tubular axis 7, inside of which a stainless-steel shaft 8 is located and connected to the tubular axis by means of a peg 9; the shaft is connected to the speed reducer through a tab 10.

In this way it is possible, through a simple operation consisting in unscrewing the screw 11 to disassemble the drums for maintenance or transport needs.

The pump is outside the floating assembly and is connected therewith through a suction pipe. In other embodiments, the suction and delivery pump for floating substances that are collected inside the room, is placed on the same equipment and connected to the frame.

The scrapers made of a plate of plastic or other suitable material can perfectly match the drum surface by means of scrapers pressed by means of a device 12 moved through a threaded pin 14 or, on the basis, through springs 13.

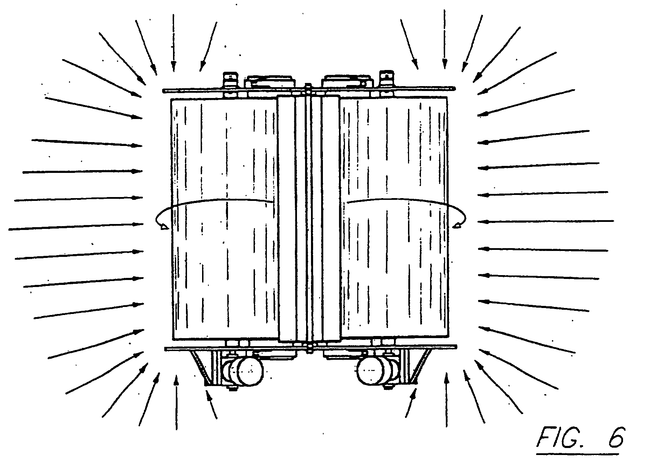

Fig. 6 shows the stream of fluid in direction of the drums of the equipment during their rotation.

## Claims

1. Floating equipment for recovering supernatant oily products, comprising two or more floating drums, driving units to rotate the floating drums consisting in a compressed-air or hydraulic or electric motors, pumps installed on board or outside connected with a suction pipe and driven by its own motor or by the same driving motor of the drums, and scrapers parallel to drums generatrices as well as lateral scrapers placed on drum bases, adapted to scrape fluids adhering to both rotating surfaces, **characterized in that** the equipment forms a delimited room (3) essentially opened at its bottom, the bottom being formed by the water surface, the walls of the delimited room (3) being the rotating drums (1) and the transversal vertical plates (2.1) forming the frame (2) of the equipment, said equipment being such that supernatant oils collected by adhesion on the oleophilic surface of drums, and scraped away, are discharged on the bottom of said delimited room (3), where they accumulate floating above the water surface due to the different specific weight *so* that they can be sucked through a filter placed stable inside the fluid, between the drums (1), through a suction mouth (1.1) inserted on the lateral wall (2.1) of the equipment.

2. Equipment according to claim 1, **characterised in that** the drums are rotatable in opposite directions, each one in order to drag the supernatant oil from outside downwards, under the drum and subsequently upwards, towards the central scraper that cause the falling of the recovered oil on the surface of the water forming the bottom of the delimited room (3).

3. Equipment according to claim 1, **characterised in that** a filter (1.2) is provided being made of a cylindrical tube the surface of which has drilled holes (1.3) to permit the inlet of supernatant oil but not of eventual solid floating material, said cylindrical drilled tube, due to the construction of the equipment, being positioned in /on the water when is in stand by.

4. Equipment according to claim 1, **characterised in that** the lateral vertical external plates (2.1) extends under the water line, in order to increase the volume of the delimited room (3) and do not permit the inlet of solid material floating laterally on the water surface, inside the said delimited room.

5. Equipment according to the previous claims, **characterised in that** its structure is unsinkable due to the fact that the delimited room (3) can contain any quantity of recovered supernatant oil without compromising the buoyancy of the drums that permit its floating.

6. Equipment according to any of the previous claims, **characterized by** a floating equipment that is completely made of plastic.

## Patentansprüche

1. Schwimmende Vorrichtung zum Rückgewinnen von schwimmenden öligen Produkten, mit zwei oder mehr treibenden Trommeln, Antriebseinheiten zur Rotation der treibenden Trommeln, bestehend aus einem Druckluft- oder Hydraulik- oder Elektromotoren, Pumpen, die an Bord oder außerhalb installiert sind, verbunden mit einem Saugrohr und angetrieben durch eigenen Motor oder durch den Antriebsmotor der Trommeln, und Abstreifer parallel zu Trommelgeneratoren sowie seitliche Abstreifer, die auf Trommelbasen liegen und geeignet sind, um Flüssigkeiten abzustreichen, und die an beide Rotationsflächen anliegen, **gekennzeichnet dadurch, dass** die Vorrichtung einen begrenzten Raum (3) bildet, der im wesentlichen an seinem Boden offen ist, wobei der Boden durch die Wasseroberfläche gebildet ist und die Wände des abgegrenzten Raums (3) die rotierenden Trommeln (1) sind und die querlaufenden senkrechten Platten (2.1) den Rahmen (2) der Vorrichtung bilden, wobei diese Vorrichtung derart gestaltet ist, dass schwimmende Öle, die sich durch Adhäsion auf der oleophilen Oberfläche von Trommeln angesammelt haben und weggestrichen werden, auf dem Boden des abgegrenzten Raums (3) landen, wo sie sich, auf der Wasseroberfläche treibend infolge des anderen spezifischen Gewichts, ansammeln, so dass sie durch einen Filter abgesaugt werden können, der sich stabil in der Flüssigkeit befindet, zwischen den Trommeln (1), durch eine Saugöffnung (1.1) in der Seitenwand (2.1) der Vorrichtung.

2. Vorrichtung nach Anspruch 1, **gekennzeichnet dadurch, dass** die Trommeln in entgegengesetzte Richtungen drehbar sind, damit jede das oben schwimmenden Öl von außen nach unten zieht, unter die Trommel und dann aufwärts, zu dem zentralen Abstreifer, der das Fallen des rückgewonnenen Öls auf die Wasseroberfläche verursacht, die den Boden des abgegrenzten Raums (3) bildet.

3. Vorrichtung nach Anspruch 1, **gekennzeichnet dadurch, dass** ein Filter (1.2) vorgesehen ist, der aus einem Zylinderrohr hergestellt ist, dessen Oberfläche Bohrlöcher (1.3) aufweist, um den Eintritt von schwimmendem Öl zu gestatten, aber nicht den von eventuellen treibenden Feststoffen, wobei das gebohrte Zylinderrohr, infolge des Baus der Vorrichtung, in/auf dem Wasser plaziert ist, wenn es in Stand-by ist.

4. Vorrichtung nach Anspruch 1, **gekennzeichnet dadurch, dass** die seitlichen senkrechten äußeren Platten (2.1) sich unter der Wasserlinie erstreckt, um das Volumen des abgegrenzten Raums (3) zu vergrößern, und nicht den Eintritt von Feststoffen, die seitlich auf der Wasseroberfläche treiben, in den abgegrenzten Raum zulassen.

5. Vorrichtung entsprechend den vorherigen Patentansprüchen, **gekennzeichnet dadurch, dass** ihre Struktur unsinkbar ist, da der abgegrenzte Raum (3) jegliche Menge von rückgewonnenem schwimmendem Öl enthalten kann, ohne die Schwimmfähigkeit der Trommeln zu gefährden, dank derer sie schwimmt.

6. Vorrichtung nach einem beliebigen der vorherigen Patentansprüche, **gekennzeichnet durch** eine schwimmende Vorrichtung, die vollständig aus Kunststoff ist.

## Revendications

1. Matériel de flottement pour récupérer les produits huileux surnageants, comprenant deux tambours flottants ou plus, des unités de commande pour faire tourner les tambours flottants consistant en des moteurs à air compressé ou hydrauliques ou électriques, des pompes installées à bord ou hors-bord reliées à un tuyau d'aspiration et guidées par leur propre moteur ou par le même moteur de commande que celui des tambours, et aussi bien des racleurs parallèles aux générateurs des tambours que des racleurs latéraux placés sur la base des tambours destinés à racler les fluides adhérant aux deux superficies tournantes, **caractérisé en ce que** l'équipement forme une chambre délimitée (3) essentiellement ouverte à sa partie inférieure, la partie inférieure étant formée par la surface d'eau, les parois de la chambre délimitée (3) étant les tambours tournants (1) et les plaques verticales transversales (2.1) formant la structure (2) de l'équipement, ledit équipement étant tel que les huiles surnageantes collectées par adhésion sur la superficie oléophile des tambours, et raclées, sont déchargées sur la partie inférieure de ladite chambre délimitée (3), où elles s'accumulent en flottant au-dessus de la surface d'eau du fait de la différence de poids spécifique de façon telle qu'elles peuvent être aspirées à travers un filtre solidement placé à l'intérieur du fluide, entre les tambours (1), à travers une bouche d'aspiration (1.1) insérée sur la paroi latérale (2.1) de l'équipement.

2. Matériel selon la revendication 1, **caractérisé en ce que** les tambours sont rotatifs dans des directions opposées, chacun pouvant entraîner l'huile surnageante à partir de l'extérieur vers le bas, en-dessous du tambour et ensuite vers le haut, vers le racleur central qui provoque la chute de l'huile récupérée sur la surface de l'eau formant la partie inférieure de la chambre délimitée (3).

3. Matériel selon la revendication 1, **caractérisé en ce qu'**un filtre (1.2) est pourvu, constitué d'un tuyau cylindrique dont la surface est percée de trous (1.3) pour permettre l'arrivée de l'huile surnageante en excluant tout éventuel matériau solide flottant, ledit tuyau cylindrique percé de trous, du fait de la construction de l'équipement, étant placé dans/sur l'eau lorsqu'il est en position de réserve.

4. Matériel selon la revendication 1, **caractérisé en ce que** les plaques extérieures latérales verticales (2.1) s'étendent en-dessous de la ligne d'eau, pour augmenter le volume de la chambre délimitée (3) et empêcher l'arrivée de matériau solide flottant latéralement sur la surface d'eau, à l'intérieur de ladite chambre délimitée.

5. Matériel selon les revendications précédentes, **caractérisé en ce que** sa structure est insubmersible du fait que la chambre délimitée (3) peut contenir n'importe quelle quantité d'huile surnageante récupérée sans compromettre la flottabilité des tambours qui permettent son flottement.

6. Matériel selon n'importe quelle revendication précédente, **caractérisé par** un matériel de flottement entièrement fait en plastique.
